## Europäisches Patentamt
## European Patent Office
## Office européen des brevets

(11) Veröffentlichungsnummer : **0 044 012**
**B1**

(12) # EUROPÄISCHE PATENTSCHRIFT

(45) Veröffentlichungstag der Patentschrift :
13.03.85

(51) Int. Cl.⁴ : **C 09 D 3/14, B 41 M 5/24**

(21) Anmeldenummer : 81105229.9

(22) Anmeldetag : 06.07.81

(54) **Verfahren zum Herstellen eines polymerisierten, hitzebeständigen Lackes.**

(30) Priorität : 02.08.80 DE 3029428
12.07.80 DE 3026468

(43) Veröffentlichungstag der Anmeldung :
20.01.82 Patentblatt 82/03

(45) Bekanntmachung des Hinweises auf die Patenterteilung : 13.03.85 Patentblatt 85/11

(84) Benannte Vertragsstaaten :
DE FR GB IT

(56) Entgegenhaltungen :
EP-A- 0 040 664
DE-A- 2 426 178
US-A- 3 682 850

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB IT

(72) Erfinder : Bahr, Dietrich Jürgen, Dr.
Rheinstrasse 49
D-7033 Herrenberg (DE)
Erfinder : Briska, Marian, Dipl. Ing.
Nürtinger Strasse 51
D-7030 Böblingen (DE)
Erfinder : Schackert, Klaus, Dr.
Römerweg 118
D-7033 Herrenberg (DE)

(74) Vertreter : Oechssler, Dietrich, Dr. rer. nat.
Schönaicher Strasse 220
D-7030 Böblingen (DE)

## Beschreibung

Die Erfindung betrifft ein neuartiges Verfahren zum Herstellen eines polymerisierten, hitzebeständigen Lackes großer Rußverträglichkeit und hoher Pigmentaufnahme, vorzugsweise für mit Aluminium beschichtete Aufzeichnungsträger, wobei von zwei Polymeren, von denen das eine ein Celluloseacetat ist, ausgegangen wird.

Zum Beschichten von Aufzeichnungsträgern wurden bisher sowohl Nitrocelluloselacke als auch Acetylcelluloselacke verwendet. Die Nitrocelluloselacke haben sich als wenig temperaturbeständig erwiesen, was einmal dazu geführt hat, daß die Schreibelektroden sich mit einem zähen bis festen Kuchen aus Verbrennungsprodukten, wie Lackpyrolisat, Feuchtigkeit und Staub überzogen haben, was nach einiger Zeit zum Ausfall der Schreibelektroden führte. Bei Anwesenheit von harten Pigmenten im Lack ist außerdem ein selbsttätiges Ausbrennen des Lacks um die Pigmentkörner herum möglich, so daß diese aus dem Lackfilm herausgerissen werden und unter den Schreibelektroden auf der Lackoberfläche rollen, wodurch der Schreibvorgang unterbrochen wird. Von den Acetylcelluloselacken kommen für derartige Aufzeichnungsträger nur folgende Lacke in Frage :

a) Cellulosepropionate.

Diese Lacke haben eine mäßige thermische Stabilität mit einem relativ hohen Erweichungspunkt von etwa 200 °C bis 220 °C, zeigen aber eine schlechte Verträglichkeit mit Ruß und niedrige Füllstoffaufnahme, sind also für eine Pigmentierung wenig geeignet.

b) Celluloseacetobutyrate.

Celluloseacetobutyrate (CAB) mit einem Butyrylgehalt von etwa 38 % (Dibutyrate) haben einen Schmelzpunkt von 160 °C bis 180 °C, besitzen aber eine gute Ruß- und Pigment- verträglichkeit und gute Filmelastizität.

Celluloseacetobutyrate mit einem Butyrylgehalt von 15 % bis 17 % (Monobutyrate) haben eine hohe thermische Stabilität. Dabei ist von Vorteil, daß der Schmelzpunkt mit dem Zersetzungspunkt praktisch zusammenfällt (220 °C bis 240 °C). Mit niedrigerem Molekulargewicht sinkt allerdings auch der Schmelzpunkt der Monobutyrate. Der Nachteil dieses Polymeren ist schlechte Haftung auf dem Papier in Verbindung mit Ruß und seine geringe Pigmentaufnahme.

c) Reine Celluloselacke.

Diese zeigen die höchste Temperaturbeständigkeit unter den Acetylcellulosen und haben einen Schmelzpunkt und Zersetzungspunkt von 240 °C. Für die Verwendung als Lacke für Aufzeichnungsträger sind sie jedoch noch weniger geeignet als die oben erwähnten Monobutyrate.

Die Sprödigkeit der Acetylcelluloselacke läßt sich durch Zugabe von Weichmachern und durch niedriges Molekulargewicht vermindern, doch gleichzeitig wird dadurch auch die Temperaturbeständigkeit dieser Lacke herabgesetzt. Auch der Einsatz von schwer entflammbaren Phosphorsäure-Estern kann hier die Temperaturbeständigkeit nicht mehr verbessern. Alle diese Lacke verursachen nach unterschiedlich langer Schreibzeit immer noch das so befürchtete Backen, d. h. das Entstehen der oben erwähnten harten Überzüge auf den Schreibelektroden.

Über die Lacke auf Cellulosebasis läßt sich noch sagen, daß sie aus technischen und wirtschaftlichen Gründen bei der Herstellung von Aufzeichnungsträgern den anderen Lacken an sich überlegen sind und als einzige hierfür Verwendung finden.

Die Erfindung hat sich nunmehr zur Aufgabe gestellt, einen hochtemperaturbeständigen Lack anzugeben, der eine große Rußverträglichkeit und Pigmentaufnahme aufweist und gleichzeitig eine hohe Elastizität und ein gutes Anhaften an Papier und Aluminium zeigt. Ein derartig temperaturbeständiges Polymere kann erfindungsgemäß dadurch gewonnen werden, daß zunächst das höher schmelzende Polymere durch Kneten etwa bei der Erweichungstemperatur homogenisiert wird, wobei Weichmacher in einer ausreichenden Menge, um die mechanische Energie des Knetvorgangs noch auf das Polymere übertragen zu können, beigemischt wird, daß anschließend das niedriger schmelzende Polymere beigemischt und diese Mischung bis zur Homogenisierung bei einer Temperatur, welche etwa in der Mitte zwischen der Erweichungstemperatur des höher schmelzenden Polymers und der des niedriger schmelzenden Polymers liegt (mittlere Erweichungstemperatur) geknetet wird und daß das so gewonnene Copolymerisat gegebenenfalls unter Beimischung von Pigmenten zu Lack verarbeitet wird. Wird zu wenig Weichmacher beigemischt, wird zu viel Energie übertragen, was zu einer starken Depolymerisation und daraus resultieren zu einem Lack mit zu geringer Viskosität führt. Deshalb wird nur so viel Weichmacher zugegeben, daß noch eine Energieübertragung auf das geknetete Material stattfindet. Die der Energieübertragung proportionale Kraft ist meßbar.

Unter dem Begriff « Celluloseacetate » sollen in diesem Zusammenhang einmal alle Celluloseacetate sowie auch Celluloseacetat-Monobutyrate und auch Celluloseacetat-Propionate verstanden werden.

Vorzugsweise geht man dabei so vor, daß lösungsmittelfreies Celluloseacetat mit hochpolymerem lösungsmittelfreiem Äthylen-Vinylacetat-Copolymerisat oder lösungsmittelfreiem Polyvinylacetat in einem Knetwerk durch Kneten in der Umgebung der mittleren Erweichungstemperatur zu einem Copolymerisat verarbeitet werden. Von besonderem Vorteil ist es, wenn man das so durch teilweise Blockpolymerisation gewonnene Copolymerisat in einer 5 %igen bis 20 %igen Lösung in höheren Ketonen oder Estern mit 3 % bis 4 % Ruß pigmentiert und je nach Polymerisationsgrad mit 0,5 % bis 5 % eines Phosphorsäure-Esters als Weichmacher vermischt.

Vorzugsweise werden ein Gemisch aus 50 % bis 90 % des Celluloseacetats und 50 % bis 10 % des Polyvinylacetats oder des Äthylen-Vinylacetats-Copolymerisats geknetet. Durch das Kneten werden die langen Molekülketten zerrissen und die zur Polymerisation notwendigen Radikale entstehen. Bei Temperaturen oberhalb 95 °C überwiegt die Blockpolymerisation, die jedoch nur zu einem mäßigen Grad verlaufen soll, damit die positiven Lackeigenschaften wie Elastizität, gute Löslichkeit usw. nicht verloren gehen, jedoch die Zersetzungs- und Schmelztemperatur heraufgesetzt werden kann. Der Nachvernetzungsgrad wird durch Zugabe von Peroxiden bestimmt.

Auch durch weiteres kaltes Kneten oder Mastizieren, wobei « kalt » bedeutet, daß bei einer niedrigen Temperatur, bei der das Copolymerisat aber noch weich ist, gearbeitet wird, läßt sich das Durchschnittsmolekulargewicht des Copolymerisats so weit verringern, daß die Viskosität und Löslichkeit der aus dem Stand der Technik bekannten Lacke für Aufzeichnungsträger erreicht werden.

Aus diesem Polymeren wird dann der eigentliche Lack wie folgt hergestellt. Das Celluloseacetat-Polyvinylacetat-Copolymerisat bzw. das mit Äthylen-Vinylacetat-Copolymerisat gebildete Copolymerisat wird alsdann als 5 %ige bis 20 %ige Lösung in höheren Ketonen oder Estern mit 3 % bis 4 % Ruß pigmentiert und je nach Polymerisationsgrad des Copolymerisats mit 0,5 % bis 5 % eines Phosphorsäure-Esters als Weichmacher gemischt. Vorzugsweise verwendet man dabei einen Phosphorsäure-Kresolester.

Rein rußpigmentierte Lacke zeichnen sich durch den weitaus niedrigsten Elektrodenabrieb aus.

Bei anders pigmentierten Lacken ist es jedoch von Vorteil, mindestens 1 % Ruß im Lack zu behalten. Dafür können etwa 5 % bis 20 % eines anorganischen Pigments, z. B. Calciumcarbonat beigemischt werden. Als Ersatz für die fehlende Schwärzung und Dreckkraft des Russes werden vorteilhafterweise einige Prozent Bitumen oder Steinkohleteerpech zugesetzt. Schwarze organische Farbstoffe sind hier ebenfalls verwendbar. Es sei abschließend noch darauf hingewiesen, daß sich alle Angaben auf den flüssigen fertigen Lack beziehen.

Das erfindungsgemäße Verfahren soll nunmehr anhand einiger durchgeführter Versuche und deren Ergebnisse noch näher erläutert werden.

Als Ausgangsstoffe wurden folgende Polymere verwendet :

1. ein Celluloseacetobutyrat mit einer Viscosität einer 20 %igen Lösung in Acetonäthanol 9 : 1 gemessen bei 23 °C von 2 500 bis 4 600 mPa · s und einem Butyrylgehalt von 15 % und einer Erweichungstemperatur von 220 °C sowie einem Molekulargewicht von etwa 40 000,

2. ein Celluloseacetobutyrat mit einer Viscosität von 10 000 bis 15 000 mPa · s, einem Butyrylgehalt von 16,5 %, einer Erweichungstemperatur von 240 °C und einem Molekulargewicht von ca. 55 000,

3. ein Äthylen-Vinylacetat-Copolymerisat mit einem Vinylacetatgehalt von 60 %, einer Mooney-Viscosität ML4 bei 100 °C von 40 ± 5,

4. ein Äthylen-Vinylacetat-Copolymeres mit einem Vinylacetatgehalt von 70 % und einer Mooney-Viscosität ML4 bei 100 °C von 60 ± 5,

5. Polyvinylacetat mit einer Viscosität einer 10 %igen Äthylacetatlösung von 700 mPa · s und einer Erweichungstemperatur von 200 °C sowie einem Molekulargewicht von 1 100 000.

Folgende Versuche wurden mit diesen Materialien durchgeführt.

Versuch Nr. 1

In einer mit Öl beheizten Knetmaschine mit einem Fassungsvermögen von 1 Liter wurden portionsweise 480 g eines Cellulosemonobutyrats zugegeben und bis zur Erweichungstemperatur von 220 °C erhitzt. Gleichzeitig wurden portionsweise 60 g eines Weichmachers zugegeben, wobei darauf geachtet werden mußte, daß das Gemisch nur so weich wird, daß die mechanische Energie des Knetwerks noch auf das Polymere übertragen wird. Die Energieübertragung wird durch zu hohe Weichmacherzugabe sowie durch zu hohe Temperatur beim Kneten verhindert. Dies wirkt sich auf die Zahl der für die nachfolgende Blockpolymerisation notwendigen und zur Verfügung stehenden Radikale aus, die durch das Zerreißen der Molekülketten entstehen. Das Polymere wurde für etwa 15 Minuten solange geknetet, bis die Masse ein seidiges Aussehen erlangt hat und alle Körner bzw. Inhomogenitäten beseitigt waren.

Anschließend wurden etwa 110 g eines Äthylen-Vinylacetat-Copolymeren der Nr. 4 zugegeben und es wurde etwa weitere 20 Minuten geknetet, bis zur Erreichung einer völligen Homogenität des dabei entstehenden Copolymerisats. Untersuchungen haben ergeben, daß es sich dabei um ein Blockpolymerisat handelt. Nach 24 Stunden Standzeit wurde das polymere Produkt in Äthylacetat gelöst (10 %ige Lösung) und zwei Tage stehengelassen. Die nicht umgesetzten polymeren Anteile setzten sich dabei oben als eine trübe Schicht ab. Die klare, reine Copolymerlösung wurde abgelassen, mit 3 % Ruß und 5 % CaCO$_3$ vermischt und mit einem Rührwerk zu Lack verarbeitet. Ein Vergleich mit einem reinen Celluloseacetobutyrat-Lack ergab eine deutlich geringere Schrumpfung des neuen Lackes, was unter anderem als Hinweis auf die verbesserte Pigmentverträglichkeit gewertet werden kann. Auch die Haftung war verbessert. Das neue Polymere weist außerdem eine wesentlich höhere Härte auf.

Versuch Nr. 2

Die Art der Durchführung des Versuchs wurde in gleicher Weise, d. h. einschließlich des Zusatzes von Weichmacher beim Kneten wie beim Versuch Nr. 1 wiederholt. Dabei wurde das Celluloseacetobutyrat Nr. 2 in einem Knetwerk bei 240 °C homogenisiert und mit 110 g Polyvinylacetat des Ausgangsstoffes Nr. 5 versetzt. Die gesamte Knetdauer betrug 45 Minuten, dann wurde die Mischung auf ca. 150 °C abgekühlt und weitergeknetet, bis ein grobkörniges Granulat entstand. Das reine Copolymere weist eine hohe Härte, gute Löslichkeit in Äthylacetat und gute Filmbildung auf. Der daraus hergestellte Lack hat eine sehr gute Haftung auf Papier und bereits ohne Weichmacherzugabe eine sehr kleine Schrumpfung.

Versuch Nr. 3

560 g des Ausgangsstoffes Nr. 2 wurden bei 240 °C durch Kneten homogenisiert und mit 110 g des Ausgangsstoffes Nr. 3 versetzt und nach dem gleichen Verfahren wie Versuch Nr. 1 copolymerisiert. Nach etwa 45 Minuten war der Knetvorgang beendet.

Bei diesem Versuch wurde nach dem Auflösen in Äthylacetat nach 48 Stunden nur wenig Copolymeres gewonnen. Durch eine längere Reaktionszeit würde man eine höhere Ausbeute erlangen, insbesondere aber, wenn man mit einem hinreichend temperaturstabilen (200-220 °C) organischen Peroxid nachvernetzen würde. Eine andere Möglichkeit besteht darin, daß durch die Zugabe der Ausgangspolymere im Verhältnis 1 : 1 und anschließender Abtrennung der nicht umgesetzten Anteile eine höhere Ausbeute erzielt wird.

Alle so hergestellten Copolymere sind um mindestens 20 °C bis 30 °C temperaturbeständiger als die bisher verwendeten Celluloseacetobutyrate und haben eine wesentlich höhere Härte, eine wesentlich bessere Rußverträglichkeit und eine wesentlich höhere Pigmentaufnahme als die bisher bekannten Celluloseacetobutyrate.

Ansprüche

1. Verfahren zum Herstellen eines polymerisierten, hitzebeständigen Lackes großer Rußverträglichkeit und hoher Pigmentaufnahme, vorzugsweise für mit Aluminium beschichtete Aufzeichnungsträger, wobei von zwei Polymeren, von denen das eine ein Celluloseacetat ist, ausgegangen wird, dadurch gekennzeichnet, daß zunächst das höher schmelzende Polymere durch Kneten etwa bei der Erweichungstemperatur homogenisiert wird, wobei Weichmacher in einer ausreichenden Menge, um die mechanische Energie des Knetvorgangs noch auf das Polymere übertragen zu können, beigemischt wird, daß anschließend das niedriger schmelzende Polymere beigemischt und diese Mischung bis zur Homogenisierung bei einer Temperatur, welche etwa in der Mitte zwischen der Erweichungstemperatur des höher schmelzenden Polymers und der des niedriger schmelzenden Polymers liegt (mittlere Erweichungstemperatur) geknetet wird und daß das so gewonnene Copolymerisat gegebenenfalls unter Beimischung von Pigmenten zu Lack verarbeitet wird.

2. Verfahren nach Anspruch 1, dadurch gekennzeichnet, daß lösungsmittelfreies Celluloseacetat mit hochpolymerem lösungsmittelfreiem Äthylen-Vinylacetat-Copolymerisat oder lösungsmittelfreiem Polyvinylacetat in einem Knetwerk durch Kneten in der Umgebung der mittleren Erweichungstemperatur zu einem Copolymerisat verarbeitet wird.

3. Verfahren nach Anspruch 2, dadurch gekennzeichnet, daß eine gegebenenfalls noch erwünschte Nachvernetzung mit einem bei der Knettemperatur stabilen Peroxid vorgenommen wird, wobei dann der Grad der Nachvernetzung durch die zugegebene Menge an Peroxid bestimmt wird.

4. Verfahren nach Anspruch 1, dadurch gekennzeichnet, daß pulverförmige oder körnige Celluloseacetate mit ebenfalls pulverförmigem oder körnigem Polyvinylacetat oder einem pulverförmigen oder körnigen Äthylen-Vinylacetat-Copolymerisat durch Kneten zu einem Copolymerisat vermischt wird.

5. Verfahren nach Anspruch 2 oder 3, dadurch gekennzeichnet, daß ein Gemisch aus 50 % bis 90 % des Celluloseacetats mit 50 % bis 10 % des Polyvinylacetats oder des Äthylen-Vinylacetat-Copolymerisats geknetet wird.

6. Verfahren nach einem der Ansprüche 1 bis 5, dadurch gekennzeichnet, daß das so durch teilweise Blockpolymerisation gewonnene Celluloseacetat-Polyvinylacetat-Copolymerisat bzw. das mit Äthylen-Vinylacetat-Copolymerisat gebildete Copolymerisat in einer 5 %igen bis 20 %igen Lösung in höheren Ketonen oder Estern mit 3 % bis 4 % Ruß pigmentiert wird und je nach Polymerisationsgrad mit 0,5 % bis 5 % eines Phosphorsäure-Esters als Weichmacher vermischt wird.

7. Verfahren nach Anspruch 6, dadurch gekennzeichnet, daß als Weichmacher ein Phosphorsäure-Kresolester verwendet wird.

8. Verfahren nach einem der Ansprüche 1 bis 5, dadurch gekennzeichnet, daß das durch teilweise Blockpolymerisation gewonnene Celluloseacetat-Polyvinylacetat-Copolymerisat bzw. das mit Äthylen-Vinylacetat-Copolymerisat gebildete Copolymerisat in höheren Ketonen oder Estern zur Herstellung einer 5 %igen bis 20 %igen Lösung gelöst wird, und daß der Lösung etwa 5 % bis 20 % eines anorganischen Pigments, wie z. B. Calciumcarbonat und zur Schwärzung Bitumen oder Steinkohlenteerpech beigemischt werden.

9. Verfahren nach Anspruch 8, dadurch gekennzeichnet, daß dem so pigmentierten Lack noch mindestens 1 % Ruß beigemischt wird.

Claims

1. Process for producing a polymerized, heat- resistant resin of a high carbon black compatibility and a high pigment absorption, preferably for record carriers coated with aluminium, with two polymers being assumed of which one is a cellulose acetate, characterized in that initially the higher melting polymer is homogenized by kneading at about softening temperature, plasticizer being admixed in a quantity sufficient for transferring to the polymer the mechanical energy of the kneading process, that subsequently the lower melting polymer is added and this mixture is kneaded up to homogenization at a temperature approximately midway between the softening temperature of the higher melting polymer and that of the lower melting polymer (mean softening temperature), and that the copolymerizate thus obtained is processed to form a resin, adding pigments, if required.

2. Process in accordance with claim 1, characterized in that solvent-free cellulose acetate and high-polymer solvent-free ethylene vinyl acetate copolymerizate, or solvent-free polyvinyl acetate are processed in a kneader by kneading at about the mean softening temperature to form a copolymerizate.

3. Process in accordance with claim 2, characterized in that subsequent cross-linkage, if required, can be effected by means of a peroxide stable at the kneading temperature, whereby the extent of the subsequent cross-linkage is determined by the quantity of peroxide added.

4. Process in accordance with claim 1, characterized in that powdery or granular cellulose acetate is mixed with polyvinyl acetate, which is also powdery or granular, or with a powdery or granular ethylene vinyl copolymerizate, by kneading to form a copolymerizate.

5. Process in accordance with claim 2 or 3, characterized in that a mixture of 50 % to 90 % of the cellulose acetate with 50 % to 10 % of the polyvinyl acetate or of the ethylene vinyl acetate copolymerizate is kneaded.

6. Process in accordance with any one of claims 1 to 5, characterized in that the cellulose acetate polyvinyl acetate copolymerizate thus obtained by partial block polymerization, or the copolymerizate formed with ethylene vinyl acetate copolymerizate, respectively, is pigmented in a 5 % to 20 % solution in higher ketones or esters with 3 % to 4 % carbon black and, depending upon the degree of polymerization, is mixed with 0.5 % to 5 % of a phosphoric ester as a plasticizer.

7. Process in accordance with claim 4, characterized in that a phosphoric acid cresol ester is used as a plasticizer.

8. Process in accordance with any one of claims 1 to 5, characterized in that the cellulose acetate polyvinyl acetate copolymerizate obtained through partial block polymerization, or the copolymerizate formed with ethylene vinyl acetate copolymerizate, respectively, is dissolved in higher ketones or esters for making a 5 % to 20 % solution, and that admixed to the solution are approximately 5 % to 20 % of an anorganic pigment, as e. g. calcium carbonate, and for blackening bitumen or coal tar pitch is added.

9. Process in accordance with claim 8, characterized in that at least 1 % carbon black is added to the lacquer thus pigmented.

## Revendications

1. Procédé pour préparer une laque polymérisée résistante à la chaleur ayant une compatibilité avec le noir carbone élevée et une absorption de pigments importante, utilisée pour un support d'impression revêtu d'aluminium et préparée à base de deux polymères dont un est un acétate de cellulose, caractérisé en ce que, le premier polymère à point de fusion élevé est dans un premier temps rendu homogène par pétrissage à une température avoisinant son point de ramollissement, une quantité suffisante d'un amollissant étant incorporé dans ce polymère afin de lui transmettre aussi l'énergie mécanique résultant du pétrissage, en ce qu'on incorpore ensuite le second polymère à point de fusion bas et en ce que ce mélange est pétri à une température avoisinant la valeur moyenne du gradient de température entre le point de ramollissement dudit premier polymère et le point de ramollissement dudit second polymère (température de ramollissement moyenne) et en ce que, le cas échéant, le copolymérisat résultant auquel on incorpore des pigments est préparé pour obtenir une laque.

2. Procédé selon la revendication 1, caractérisé en ce que, un acétate de cellulose sans solvant est traité avec un copolymérisat d'acétate de vinyle-éthylène à polymérisation élevée ou bien avec un acétate de polyvinyle sans solvant dans un dispositif de pétrissage à une température avoisinant le point de ramollissement moyen de façon à obtenir un copolymérisat.

3. Procédé selon la revendication 2, caractérisé en ce que, il est procédé, le cas échéant, à une réticulation ultérieure avec un peroxide stable à la température de pétrissage, le taux de réticulation étant déterminé en fonction de la quantité dudit peroxide.

4. Procédé selon la revendication 1, caractérisé en ce que, on incorpore le cas échéant dans des acétates en poudre ou en grains un acétate de polyvinyle aussi en poudre ou en grains, ou bien, un copolymère d'acétate de vinyle-éthylène en poudre ou en grains pour obtenir par pétrissage un copolymérisat.

5. Procédé selon la revendication 2 ou 3, caractérisé en ce que, on pétrit un mélange comportant une quantité comprise entre 50 et 90 % dudit acétate de cellulose avec une quantité comprise entre 50 et 10 % dudit acétate de polyvinyle ou bien dudit copolymérisat d'acétate de vinyle-éthylène.

6. Procédé selon une des revendications 1 à 5, caractérisé en ce que, le copolymérat d'acétate de polyvinyle d'acétate de cellulose obtenu par polymérisation en masse partielle ou le copolymérisat formé avec ledit copolymérisat d'acétate de vinyle monochloré est pigmenté dans une solution entre 5 et 20 % de cétones ou d'esters plus forts comportant entre 3 et 4 % de noir de carbone et mélangé avec une quantité comprise, selon le taux de polymérisation, entre 0,5 et 5 % d'un ester d'acide phosphorique servant d'amollissant.

7. Procédé selon la revendication 6, caractérisé en ce que, on utilise comme amollissant un crésol-ester d'acide phosphorique.

8. Procédé selon une des revendications 1 à 5, caractérisé en ce que, le copolymérisat d'acétate de polyvinyle d'acétate de cellulose résultant d'une polymérisation en masse partielle ou le copolymérisat formé avec ledit copolymérisat d'acétate de vinyle monochloré est dissous dans des cétones forts ou des esters afin d'obtenir une solution comprise entre 5 et 20 %, et en ce qu'on incorpore dans cette solution une quantité comprise entre environ 5 et 20 % d'un pigment minéral, tel le carbonate de calcium, ainsi que, afin de noircir cette solution, des bitumes ou du brai de houille.

9. Procédé selon la revendication 8, caractérisé en ce que, on ajoute encore une quantité d'au moins 1 % de noir de carbone à ladite laque pigmentée.